# EUROPEAN PATENT APPLICATION

(11) **EP 0 621 069 A1**
(43) Date of publication of application: **26.10.1994**
(21) Application number: 94106069.1
(22) Date of filing: 19.04.1994
(51) Int. Cl.: B01D 53/04, C01B 13/02

(54) **Adsorption process to produce 99+% oxygen from air**

(30) Priority: 21.04.1993 US 51029
(71) Applicant: AIR PRODUCTS AND CHEMICALS, INC., Allentown, PA 18195-1501 (US)
(72) Inventor: Sircar, Shivaji, Wescosville, PA 18106 (US)
(74) Representative: Kador & Partner

(57) **Abstract**

A process is set forth for using an oxygen selective adsorbent to produce 99+% oxygen from air in a single stage operation. The process comprises the steps of (a) adsorption of oxygen from air in an adsorption zone, (b) oxygen rinse to purge the adsorption zone of impurities consisting primarily of nitrogen, (c) depressurization of the adsorption zone to produce the 99+% oxygen and (d) repressurization of the adsorption zone with nitrogen-enriched gas.

## Description

### TECHNICAL FIELD

The present invention relates to an adsorption process which uses an oxygen selective adsorbent to produce 99+% oxygen from air in a single stage operation.

### BACKGROUND OF THE INVENTION

Adsorption processes which produce oxygen from air typically rely on selective physical adsorption (equilibrium based) of nitrogen over oxygen on a zeolite based adsorbent. The oxygen product is recovered as that portion of the feed air which passes through the adsorption zone. A state of the art example is the process taught in US Patent 4,756,723 by Sircar. Unfortunately, however, the nitrogen selective adsorbents used in these processes generally do not also adsorb argon. Since the ratio of oxygen to argon in ambient air is approximately 20:1, this limits the maximum attainable purity of the oxygen product stream in a single stage operation to approximately 95%, even assuming complete nitrogen removal. A higher purity would require further processing in a second stage of operation which is typically accomplished by selective physical adsorption (kinetic based) of oxygen over argon/nitrogen on a carbon based adsorbent.

More recently, a new class of adsorbents have been developed for air fractionation which rely on selective chemical adsorption (chemisorption) of oxygen over nitrogen and argon. Such oxygen selective adsorbents, which are typically cobalt based, exploit the fact that adsorbing the oxygen vis-a-vis the nitrogen component of air rather is inherently more efficient to the extent that oxygen accounts for only 21% of air while nitrogen accounts for 78% of air. See for example US Patent 5,141,725 by Ramprasad et al and US Patent 4,477,418 by Mullhaupt et al. When using oxygen selective adsorbents to fractionate air, the oxygen product is recovered during depressurization of the adsorption zone. For example, see Japanese patent application No. 4-161214. Unfortunately, however, the adsorption zone will also contain co-adsorbed and/or void space impurities (primarily nitrogen) which reduces the purity of the oxygen product. The present invention overcomes this problem and produces a 99+% oxygen product by rinsing the adsorption zone with essentially pure oxygen prior to the depressurization step in order to purge from the adsorption zone any co-adsorbed or void space impurities.

Rinsing the adsorption zone with the more adsorbable component prior to depressurization is taught in the art. See for example US Patent 4,077,779 and published European application 0 913 716 (both by Sircar et al) in the context of fuel gas fractionation and US Patent 4,013,429 (also by Sircar et al) in the context of air fractionation wherein nitrogen is the more adsorbable component. Heretofore, the adsorption prior art does not teach such a pre-depressurization rinse step in the context of air fractionation wherein oxygen is the more adsorbable component.

### SUMMARY OF THE INVENTION

The present invention is a process to produce 99+% oxygen from air in a single stage operation comprising the steps of:
(a) passing a feed air stream through an adsorption zone containing an oxygen selective adsorbent to produce an oxygen saturated adsorption zone and a nitrogen-enriched effluent stream;
(b) rinsing the adsorption zone with essentially pure oxygen in order to purge from the adsorption zone any co-adsorbed or void space impurities;
(c) depressurizing the adsorption zone to produce an effluent stream containing said 99+% oxygen;
(d) repressurizing the adsorption zone with nitrogen-enriched gas.

In a preferred embodiment of the present invention, steps (a) through (d) are performed as a continually repeating cycle of steps and are effected in a system comprising a plurality of adsorption zones which each undergo their respective cycle of steps while collectively operated sequentially in parallel with one another.

### BRIEF DESCRIPTION OF THE DRAWINGS

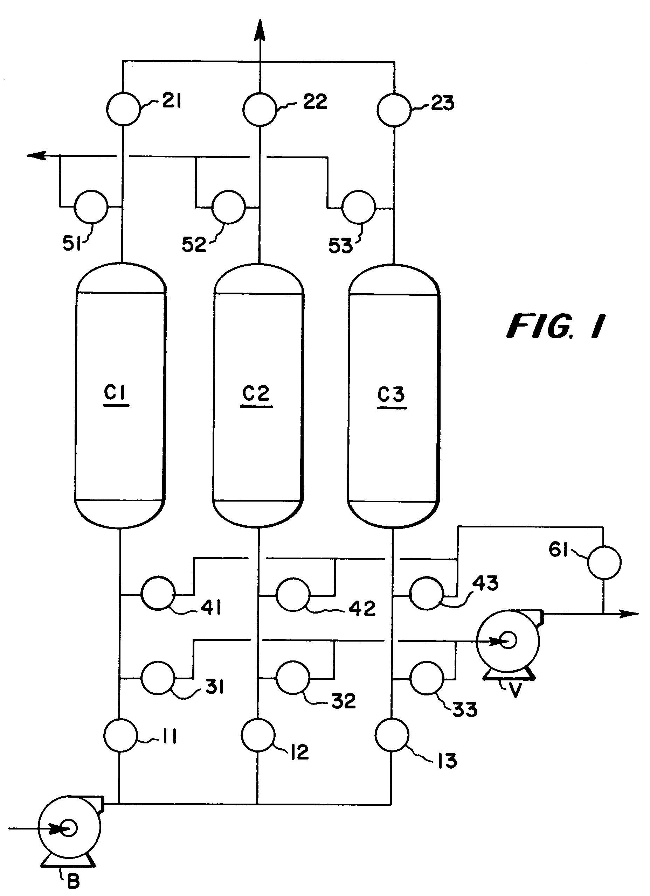

Figure 1 is drawing illustrating one embodiment of the present invention.

### DETAILED DESCRIPTION OF THE INVENTION

The present invention will now be described in detail with reference to the drawing of Figure 1. Figure 1 is a schematic diagram illustrating one embodiment of the present invention wherein the present invention is effected in a system comprising three adsorption zones which each undergo their respective cycle of steps (a) through (d) while collectively operated sequentially in parallel with one another.

Figure 1's process configuration consists of an air blower B, three adsorption columns C1, C2, and C3 each containing an oxygen selective adsorbent, vacuum compressor V, and valves 11-13, 21-23, 31-33, 41-43, 51-53, and 61. Table 1 summarizes Fig. 1's valve sequence and adsorption column step sequence for one complete cycle. Table I utilizes 6 time intervals and a total elapsed time of 12 time units to cover the four separate steps of the cycle so that the relative times for each step can be clearly indicated. It should be recognized that Figure 1's embodiment and the operation sequence of Table 1 is only an example. Other embodiments can be easily designed by one skilled in the art.

It should also be recognized that although the "pressure swing" in Figure 1 is between near ambient pressure and sub-ambient pressure, other pressure swings are also possible. For example, one could perform the adsorption and rinse steps at an above ambient pressure while reducing the pressure to near ambient or sub-ambient pressure during the depressurization step.

Finally, it should be recognized that Figure 1 assumes that the feed air has been dried prior to its fractionation. If desired, one can integrate the drying of the feed air with the fractionation itself by placing a layer of a desiccant material at the feed ends of the columns in order to dry the air before it reaches the oxygen selective adsorbent. In such a case, the adsorbed water will be desorbed along with the oxygen product during the depressurization step and thus the oxygen product will be wet.

**TABLE 1**

| | Time Interval | | | | | |
|---|---|---|---|---|---|---|
| | 0-2 | 2-4 | 4-6 | 6-8 | 8-10 | 10-12 |
| Column Operation* | | | | | | |
| Column C1 | (a) | (a) | (b) | (c) | (c) | (d) |
| Column C2 | (c) | (d) | (a) | (a) | (b) | (c) |
| Column C3 | (b) | (c) | (c) | (d) | (a) | (a) |

| Valve Position (o = open; c = closed) | | | | | | |
|---|---|---|---|---|---|---|
| Valve 11 | o | o | c | c | c | c |
| Valve 12 | c | c | o | o | c | c |
| Valve 13 | c | c | c | c | o | o |
| Valve 21 | o | o | c | c | c | o |
| Valve 22 | c | o | o | o | c | c |
| Valve 23 | c | c | c | o | o | o |
| Valve 31 | c | c | c | o | o | c |
| Valve 32 | o | c | c | c | c | o |
| Valve 33 | c | o | o | c | c | c |
| Valve 41 | c | c | o | c | c | c |
| Valve 42 | c | c | c | c | o | c |
| Valve 43 | o | c | c | c | c | c |
| Valve 51 | c | c | o | c | c | c |
| Valve 52 | c | c | c | c | o | c |
| Valve 53 | o | c | c | c | c | c |
| Valve 61 | o | c | o | c | o | c |

| | | | | | | |
|---|---|---|---|---|---|---|
| * (a), (b), (c) and (d) correspond to steps (a), (b), (c) and (d) of the present invention as defined in Claim 1 | | | | | | |

By way of example, Table 1's step sequence and valve sequence will be described as it relates to the operation of Figure 1's adsorption column C1. During the first time interval (time units 0-2), column C1 begins the adsorption step or step (a) of the present invention. Ambient air is introduced into column C1 at near ambient pressure through blower B and open valve 11. A nitrogen-enriched stream is withdrawn through open valve 21. During the second time interval (time units 2-4), valve 22 is opened so that column C1's nitrogen-enriched effluent can be used to repressurize column C2 which is currently on step (d) of the present invention. At the end of this second time interval, column C1 is nearly saturated with air and column C1's adsorption step is terminated by closing valves 11 and 21.

During the third time interval (time units 4-6), column C1 undergoes the rinse step or step (b) of the present invention. In this step, column C1 is rinsed cocurrently to the feed flow with a portion of the 99+% oxygen effluent from column C3 which is currently on step (c) of the present invention. The 99+% oxygen effluent from column C3 is removed through open valve 33 and is introduced into column C1 at near ambient pressure through open valves 61 and 41. The effluent from this rinse step, which has an air like composition, is withdrawn through open valve 51. If desired, it can be recycled to the feed air.

During the fourth time interval (time units 6-8), column C1 begins the depressurization step or step (c) of the present invention. In this step, column C1 is desorbed and evacuated by reducing its pressure to approximately 0.08-0.3 atmospheres. This pressure reduction is accomplished by opening valve 31 and subjecting column C1 to a vacuum with vacuum compressor V. The effluent from this time interval is the 99+% oxygen product which is removed from the system as the oxygen product. During the fifth time interval (time units 8-10), valves 42 and 61 are opened so that a portion of column C1's 99+% oxygen effluent can be used to rinse column C2 which is currently on step (b) of the present invention.

Finally, during the sixth and last time interval (time units 10-12), column C1 undergoes the repressurization step or step (d) of the present invention. Valve 31 is closed and valves 21 is opened in order to allow nitrogen-enriched effluent from column C3, which is currently undergoing the adsorption step, to repressurize column C1 to near ambient pressure. After repressurization, column C1's cycle is complete and a new cycle can commence. Each adsorption column undergoes a similar sequence of operation as is described for column C1 as can be further detailed from Table 1.

The present invention has been described with reference to a specific embodiment thereof. This embodiment should not be seen as a limitation of the scope of the present invention; the scope of such being ascertained by the following claims.

## Claims

**1.** A process to produce 99+% oxygen from air in a single stage operation comprising the steps of:
(a) passing a feed air stream through an adsorption zone containing an oxygen selective adsorbent to produce an oxygen saturated adsorption zone and a nitrogen-enriched effluent stream;
(b) rinsing the adsorption zone with essentially pure oxygen in order to purge from the adsorption zone any co-adsorbed or void space impurities;
(c) depressurizing the adsorption zone to produce an effluent stream containing said 99+% oxygen;
(d) repressurizing the adsorption zone with nitrogen-enriched gas.

**2.** The process of Claim 1 wherein steps (a) through (d) are performed as a continually repeating cycle of steps and are effected in a system comprising a plurality of adsorption zones which each undergo their respective cycle of steps while collectively operated sequentially in parallel with one another.

**4.** The process of Claim 3 wherein: a portion of the nitrogen-enriched effluent stream produced in step (a) is used for repressurizing a parallel adsorption zone; at least a portion of the rinse effluent produced in step (b) is recycled to the feed air; and a portion of the 99+% oxygen produced in step (c) is used for rinsing a parallel adsorption zone.

**5.** The process of Claim 1 wherein: steps (a) and (b) are conducted at near ambient pressure; step (c) reduces the pressure of the adsorption zone to approximately 0.08-0.3 atmospheres; and step (d) returns the pressure of the adsorption zone to near ambient pressure.

**6.** The method of Claim 1 wherein the adsorption zone contains an initial layer of a desiccant material in order to dry the air before it reaches the oxygen selective adsorbent.
